# FASCICULE DE BREVET EUROPEEN

(11) **EP 2 167 347 B1**
(45) Date de publication et mention de la délivrance du brevet: **12.01.2011**
(21) Numéro de dépôt: 08806161.9
(22) Date de dépôt: 03.07.2008
(51) Int. Cl.: B60Q 1/04, B62D 65/02, B60R 13/02, B60Q 1/00, B62D 65/16

(54) **SYSTEME DE FIXATION D'UNE JUPE DE FEU DE VEHICULE, ET PROCEDE D'ASSEMBLAGE D'UNE JUPE DE FEU SUR UN BOITIER DE FEU AU MOYEN D'UN TEL SYSTEME**
SYSTEM ZUR BEFESTIGUNG DER LICHTSCHÜRZE EINES FAHRZEUGS UND VERFAHREN ZUR BEFESTIGUNG DER LICHTSCHÜRZE AM LICHTGEHÄUSE MITHILFE EINES SOLCHEN SYSTEMS
SYSTEM FOR ATTACHING THE LIGHT SKIRT OF A VEHICLE, AND METHOD FOR ASSEMBLING THE LIGHT SKIRT ON THE LIGHT HOUSING USING SUCH A SYSTEM

(30) Priorité: 13.07.2007 FR 0756473
(43) Date de publication de la demande: 31.03.2010
(73) Titulaire: Peugeot Citroën Automobiles SA, 78140 Vélizy-Villacoublay (FR)
(72) Inventeur: PERON, Rodolphe, F-95220 Herblay (FR)
(74) Mandataire: Fernandez, Francis Lionel
(86) Numéro de dépôt international: PCT/FR2008/051238
(87) Numéro de publication internationale: WO 2009/010670

(56) Documents cités:
- EP-A- 1 384 622
- FR-A- 2 761 127

## Description

La présente invention concerne un système de fixation d'une jupe de feu de véhicule. Elle concerne également un procédé d'assemblage d'une jupe de feu sur un boîtier de feu de véhicule au moyen d'un tel système.

Un tel système et procédé est généralement connu.

Une jupe de feu arrière (ou avant) de véhicule est généralement issue du boîtier de feu correspondant, c'est-à-dire « monobloc » avec ce dernier. Elle a une fonction essentiellement esthétique.

De façon à faciliter le montage du feu en fabrication automobile, on a recours, de plus à plus, à une configuration différente dans laquelle la jupe de feu est une pièce distincte, séparée du boîtier de feu.

Dans cette configuration de jupe de feu séparée, il faut prévoir des moyens de fixation de cette dernière sur le boîtier de feu du véhicule.

Il y a donc nécessité de trouver un bon moyen d'assemblage et de fixation entre, d'une part, un dispositif assez complexe incluant des lampes et une pièce de tôle telle que la jupe.

Dans le domaine automobile, on connaît déjà, un moyen de fixation de ce genre par le document US 6 092 916, qui décrit une garniture de toit modulaire comprenant, d'une part, un corps généralement planaire ayant une ouverture centrale, et d'autre part, un ensemble dit « ensemble lampe » avec un composant inférieur fixé à une face inférieure de la garniture de toit et un composant supérieur fixé à une face supérieure de la garniture. Les deux composants (supérieur et inférieur) sont fixés ensemble. L'un des deux composants comporte des tenons déformables pour fixation par encliquetage sur l'autre composant. Le composant supérieur est également fixé à un cadre de véhicule à l'aide d'une pluralité de crêtes. De plus, le composant supérieur est muni d'une surface adhésive comprenant une pluralité de bandes adhésives espacées pour fixer le composant supérieur au cadre de plafond du véhicule à l'aide de la pluralité de crêtes. Ces bandes adhésives espacées, conjointement avec la pluralité de crêtes sur le cadre du plafond du véhicule, fournissent des moyens d'alignement de l'ensemble lampe par rapport au cadre de plafond du véhicule.

Le but de la présente invention est de fournir un système de fixation d'une jupe de feu de véhicule, qui garantisse une bonne tenue de la jupe, ainsi qu'un bon positionnement et un bon « plaquage » de la jupe sur le boîtier de feu de véhicule. Un bon plaquage est réalisé lorsque la jupe est bien plaquée contre la surface de jonction du boîtier, sans jeu dans le plan d'assemblage des deux pièces.

Un autre but de la présente invention est de fournir un tel système, qui soit de conception simple, de fabrication aisée, d'utilisation facile, en particulier qui ne nécessite pas de fixation rapportée, qui soit robuste, fiable, économique, et qui ne soit pas visible.

Pour parvenir à ces buts, la présente invention conçoit un nouveau système de fixation d'une jupe de feu sur un boîtier de feu de véhicule, et ce nouveau système comprend les moyens suivants, en combinaison :
- des moyens de positionnement de la jupe sur le boîtier de feu,
- des moyens de clippage de la jupe sur le boîtier de feu, et
- des moyens de plaquage de la jupe sur le boîtier de feu.

Les moyens de positionnement de la jupe sur le boîtier de feu comprennent au moins un moyen de positionnement, chaque moyen de positionnement comprenant un support de positionnement, solidaire de la jupe, et destiné à recevoir et positionner, par concordance des formes, une patte de positionnement, solidaire du boîtier de feu.

De préférence, chaque patte de positionnement présente une forme de « U » dirigé selon l'axe longitudinal du véhicule, un support de positionnement de la jupe venant en butée contre la base de ladite forme en « U ».

De préférence également, les moyens de positionnement de la jupe sur le boîtier de feu comprennent un moyen de positionnement en partie supérieure et un moyen de positionnement en partie inférieure de la jupe de feu.

Les moyens de clippage de la jupe sur le boîtier de feu comprennent une pluralité de moyens de clippage, chaque moyen comprenant une patte de clippage, solidaire de la jupe, et un dispositif de clippage élastiquement déformable, solidaire du boîtier, destiné à retenir et bloquer la patte de clippage.

De préférence, chaque patte de clippage de la jupe présente une extrémité - ou tenon - en forme de flèche qui vient s'encliqueter dans le dispositif de clippage élastiquement déformable du boîtier, et est, par conséquent retenue dans ledit dispositif.

L'encliquetage de la patte de clippage se fait, de préférence, dans une partie en « étranglement » du dispositif de clippage élastiquement déformable.

Les moyens de clippage de la jupe sur le boîtier de feu peuvent être au nombre de trois, régulièrement répartis sur la hauteur de la jupe.

Les moyens de plaquage de la jupe sur le boîtier de feu de véhicule comprennent au moins un moyen de plaquage, chaque moyen de plaquage comportant une patte de plaquage, solidaire de la jupe, destinée à venir s'insérer dans un support de patte de plaquage, solidaire du boîtier de feu.

De préférence, chaque patte de plaquage présente une partie en forme de crochet, et chaque support de patte de plaquage une forme générale en « U », l'extrémité en crochet de la patte de plaquage venant s'insérer entre les branches du « U » du support de patte de plaquage.

Les moyens de plaquage de la jupe sur le boîtier peuvent être au nombre de deux répartis sur la hauteur de la jupe.

La présente invention conçoit aussi un procédé d'assemblage d'une jupe de feu sur un boîtier de feu de véhicule au moyen d'un système de fixation conforme à celui décrit ci-dessus dans ses grandes lignes.

Ce nouveau procédé d'assemblage comporte les étapes suivantes, prises en combinaison :
- une première étape de translation de la jupe de feu sur la partie latérale du boîtier de feu jusqu'à ce que ce que les moyens de placage de la jupe et du boîtier soient assemblés, et
- une seconde étape de rotation de la jupe de feu autour d'un axe de rotation, sensiblement compris dans le plan de placage de la jupe sur le boîtier, jusqu'à ce que les moyens de positionnement et les moyens de clippage de la jupe soient assemblés sur les moyens correspondants du boîtier.

D'autres buts, avantages et caractéristiques de l'invention apparaîtront dans la description qui suit d'un mode de réalisation préféré, non limitatif de l'objet et de la portée de la présente demande de brevet, accompagnée de dessins dans lesquels :
- la figure 1 est une vue frontale d'un feu arrière de véhicule et de la jupe de feu associée, en position assemblée,
- la figure 2 est une vue arrière du feu de la figure 1 avec sa jupe associée,
- la figure 3A est une vue en perspective de la jupe de feu selon l'invention, avec notamment ses supports de positionnement sur le boîtier de feu,
- la figure 3B est une vue agrandie d'un des supports de positionnement représentés sur la figure 3A,
- la figure 4A représente le boîtier de feu selon l'invention, avec notamment ses pattes de positionnement sur la jupe de feu,
- la figure 4B est une vue agrandie d'une des pattes de positionnement représentées sur la figure 4A,
- la figure 5 représente l'assemblage d'un support de positionnement de la figure 3B et d'une patte de positionnement de la figure 4B,
- la figure 6A est une vue en perspective de la jupe de feu selon l'invention, avec notamment ses pattes de clippage sur le boîtier de feu,
- la figure 6B est une vue agrandie d'une des pattes de clippage représentées sur la figure 6A,
- la figure 7A représente le boîtier de feu selon l'invention, avec notamment ses dispositifs de clippage élastiquement déformables sur la jupe de feu,
- la figure 7B est une vue agrandie d'un des dispositifs de clippage élastiquement déformables représentés sur la figure 7A,
- la figure 8 représente l'assemblage d'une patte de clippage de la figure 6B et d'un dispositif de clippage élastiquement déformable de la figure 7B,
- la figure 9A est une vue en perspective de la jupe de feu selon l'invention, avec notamment ses pattes de plaquage de la jupe sur le boîtier de feu,
- la figure 9B est une vue agrandie d'une des pattes de plaquage représentées sur la figure 9A,
- la figure 10A représente le boîtier de feu selon l'invention, avec notamment ses supports de patte de plaquage destinés au plaquage sur la jupe de feu,
- la figure 10B est une vue agrandie d'un des supports de patte de plaquage représentés sur la figure 10A,
- les figures 11A et 11B sont des vues en perspective de l'assemblage d'une patte de plaquage de la figure 9B et d'un support de patte de plaquage de la figure 10B,
- la figure 12 est une vue arrière, en perspective, représentant la première étape - ou étape de translation - du procédé d'assemblage de la jupe de feu sur le boîtier de feu,
- la figure 13 est une vue avant, en perspective, représentant également la première étape du procédé d'assemblage de la jupe de feu sur le boîtier de feu,
- la figure 13A est une vue agrandie d'un moyen de plaquage de la jupe de feu sur le boîtier de feu en position d'assemblage,
- la figure 14 est une vue avant, en perspective, représentant la seconde étape - ou étape de rotation - du procédé d'assemblage de la jupe de feu sur le boîtier de feu,
- la figure 15 est une vue arrière, en perspective, représentant la seconde étape du procédé d'assemblage de la jupe de feu sur le boîtier de feu,
- la figure 16 est une vue arrière, en perspective, représentant l'assemblage de la jupe de feu sur le boîtier de feu, la seconde étape (rotation) étant terminée,
- la figure 16A une vue agrandie d'un moyen de positionnement et d'un moyen de clippage de la jupe de feu sur le boîtier de feu en position d'assemblage, et
- la figure 17 illustre les différents efforts mécaniques qui garantissent une bonne mise en position et un bon plaquage de la jupe de feu sur l'avant du boîtier de feu.

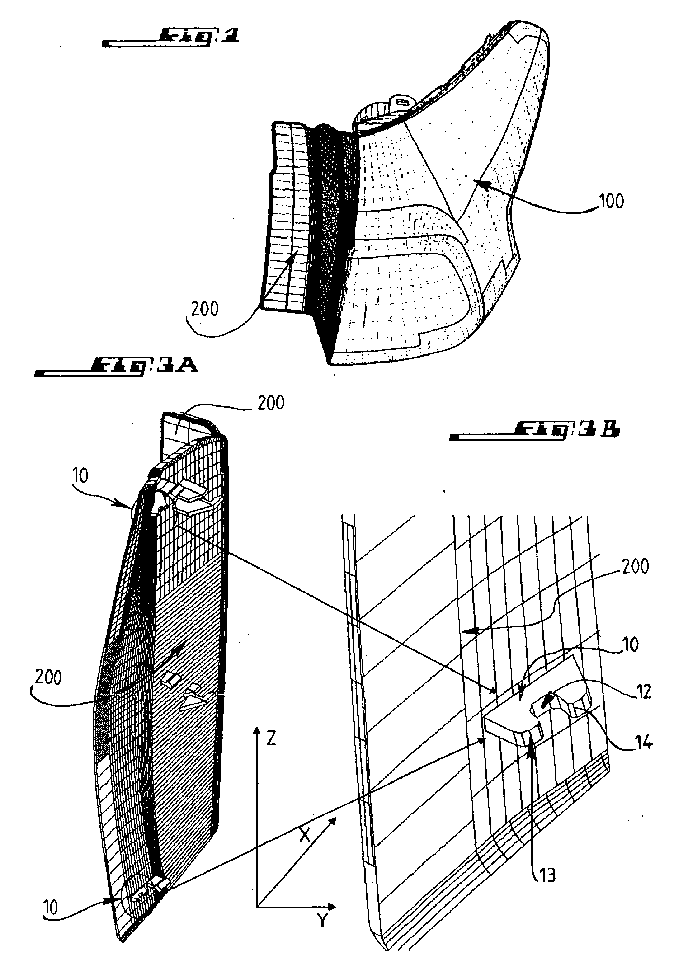

En référence au dessin de la figure 1, on a représenté un feu de véhicule, dans un boîtier de référence générale 100, qui peut être un feu arrière de véhicule automobile, et une jupe de feu, de référence générale 200, associée au feu. La jupe de feu 200 a un rôle essentiellement esthétique : elle permet de cacher la zone technique du feu qui pourrait être mise en évidence lors de l'ouverture du coffre du véhicule.

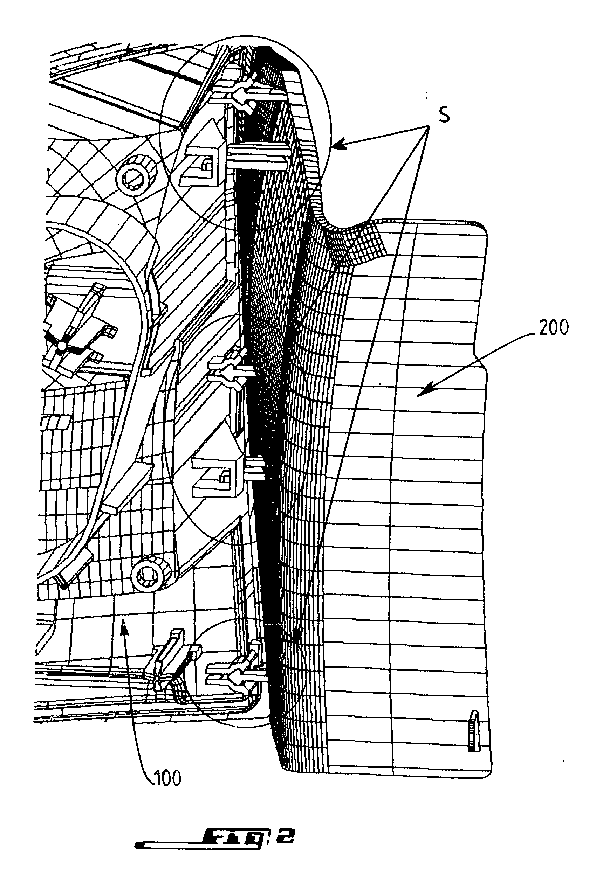

Sur la figure 2, on a représenté l'arrière de l'ensemble constitué par le boîtier de feu 100 et la jupe de feu 200. Répartis sensiblement dans le voisinage du plan de liaison entre le boîtier de feu 100 et la jupe de feu 200 sont prévus des moyens de positionnement, de fixation et de plaquage, désignés S de manière générale, de l'assemblage entre le boîtier de feu 100 et la jupe de feu 200. Ces moyens S sont décrits séparément et de manière détaillée dans la suite du présent texte.

Les moyens S comprennent, en premier lieu, des moyens de positionnement.

Ces moyens de positionnement comprennent des moyens de positionnement situés sur la jupe de feu 200, qui coopèrent avec des moyens complémentaires de positionnement situés sur le boîtier de feu 100, de manière à réaliser le positionnement.

Les moyens de positionnement situés sur la jupe de feu 200 sont, comme cela est représenté sur le dessin des figures 3A et 3B, au nombre de deux : un premier moyen en partie supérieure et un second moyen en partie inférieure. Chaque moyen de positionnement situé sur la jupe de feu 200 présente la forme d'un support de positionnement, de référence générale 10, solidaire ou, de préférence, issu directement de la jupe 200. Ce support de positionnement 10 permet le bon positionnement de la jupe 200 sur le boîtier 100, notamment suivant la direction de l'axe X, et comporte, à cette fin, un palier support 12 en retrait compris entre deux parties en avancée, 13 et 14, dont la fonction sera expliquée plus loin.

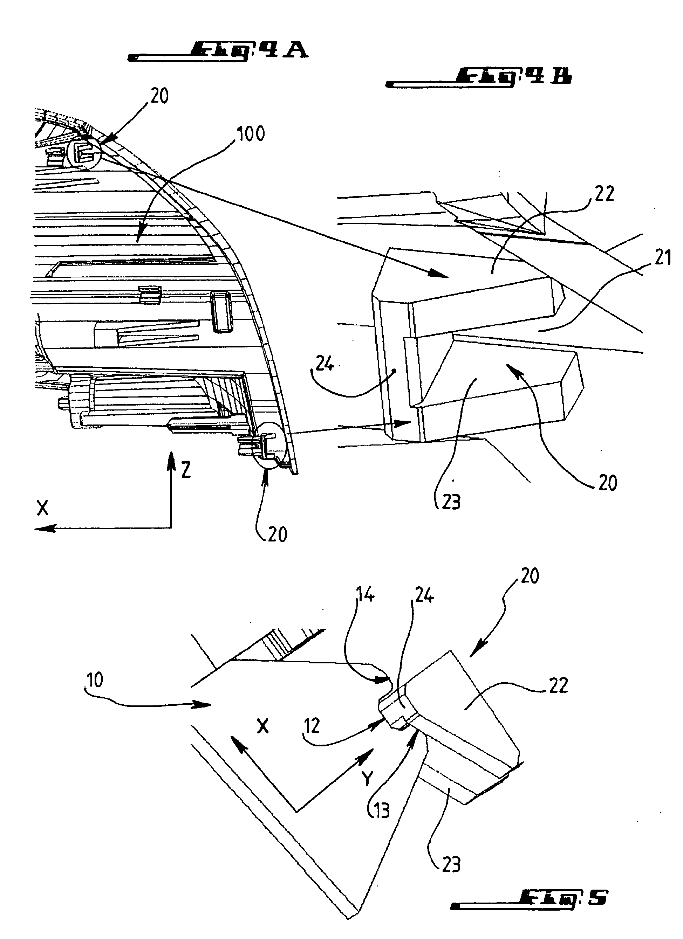

Les moyens complémentaires de positionnement situés sur le boîtier de feu 100 destinés à coopérer avec les supports de positionnement 10 de la jupe de feu 200 sont représentés sur le dessin des figures 4A et 4B. Ils sont, en conséquence, également au nombre de deux dans le présent exemple de réalisation de l'invention.

Chaque moyen complémentaire de positionnement situé sur le boîtier de feu 100, solidaire ou issu directement du boîtier 100, présente la forme d'une patte de positionnement, de référence générale 20. La patte de positionnement 20 présente une forme générale de « U » dirigé selon l'axe X longitudinal du véhicule, les deux branches du « U », référencées 22 et 23, étant de forme sensiblement triangulaire et la base du « U », référencée 24, étant plus avancée que les branches 22 et 23. Les deux branches 22 et 23 définissent un espace inter branches référencé 21.

Comme on peut le voir sur le dessin de la figure 5, le palier en retrait 12 du support de positionnement 10 de la jupe 200 vient se plaquer contre la base 24 et entre les deux branches 22 et 23 de la patte de positionnement 20.

Ce système de positionnement du support de positionnement 10 et de la patte de positionnement 20 garantit le bon positionnement en X de la jupe de feu 200 sur le boîtier de feu 100, ainsi qu'un bon positionnement en Y comme on peut le voir sur la figure 5.

Le système de fixation d'une jupe de feu de véhicule selon la présente invention comporte également des moyens de clippage de la jupe de feu 200 sur le boîtier de feu 100.

Ces moyens de clippage comprennent des moyens de clippage situés sur la jupe de feu 200 qui coopèrent par concordance des formes avec des moyens complémentaires de clippage situés sur le boîtier de feu 100, de manière à réaliser la retenue de la jupe 200 sur le boîtier 100.

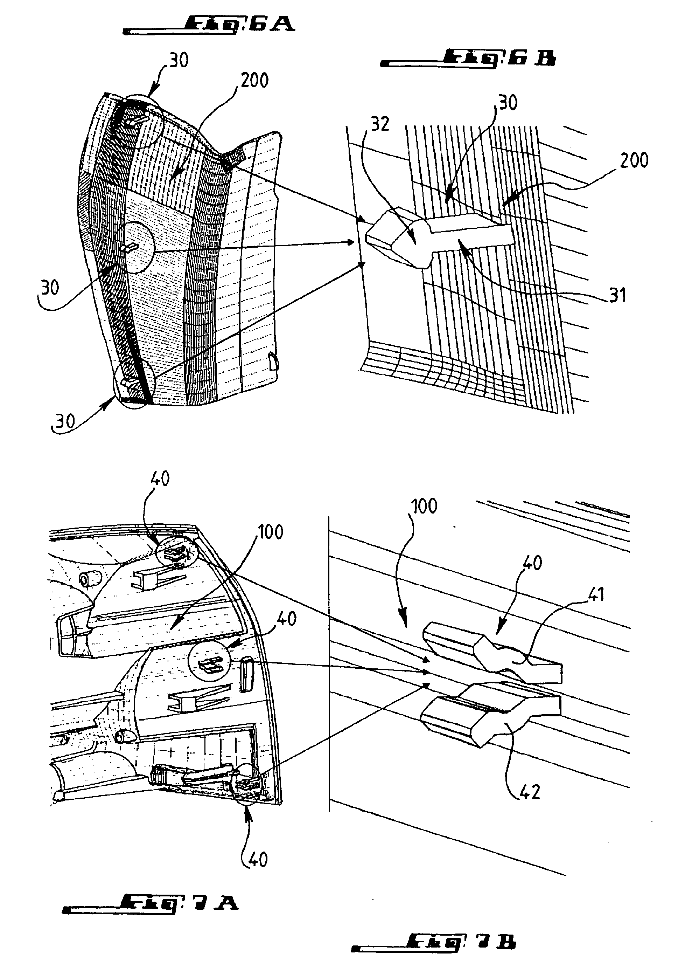

En référence aux figures 6A et 6B, suivant la hauteur de la jupe 200, et à titre d'exemple non limitatif de l'objet de l'invention, les moyens de clippage situés sur la jupe de feu 200 peuvent être au nombre de trois, régulièrement répartis sur la hauteur de la jupe : un premier moyen en partie supérieure, un deuxième moyen en partie médiane et un troisième moyen en partie inférieure.

Chaque moyen de clippage situé sur la jupe de feu 200 présente la forme d'une patte de clippage, solidaire ou issu directement de la jupe 200, de référence générale 30. Chaque patte de clippage 30 est une sorte de tenon, dont l'extrémité libre - ou tête - est configurée en forme de « flèche » 32, et dont la partie principale 31 est sensiblement rectiligne et fait saillie de la surface de la jupe 200. La tête « pointue » 32 est destinée à coopérer par concordance des formes avec une autre partie du moyen de clippage qui est située sur le boîtier de feu 100 et est décrit ci-dessous.

En vis-à-vis des pattes de clippage 30 définies sur la jupe de feu 200 sont prévus, sur le boîtier de feu 100, des dispositifs de clippage élastiquement déformables, référencés 40, solidaires du boîtier de feu 100, destinés à retenir et bloquer les pattes de clippage 30. Ces dispositifs de clippage élastiquement déformables, de préférence en matière plastique comme les pattes de clippage 30, sont représentés sur le dessin des figures 7A et 7B.

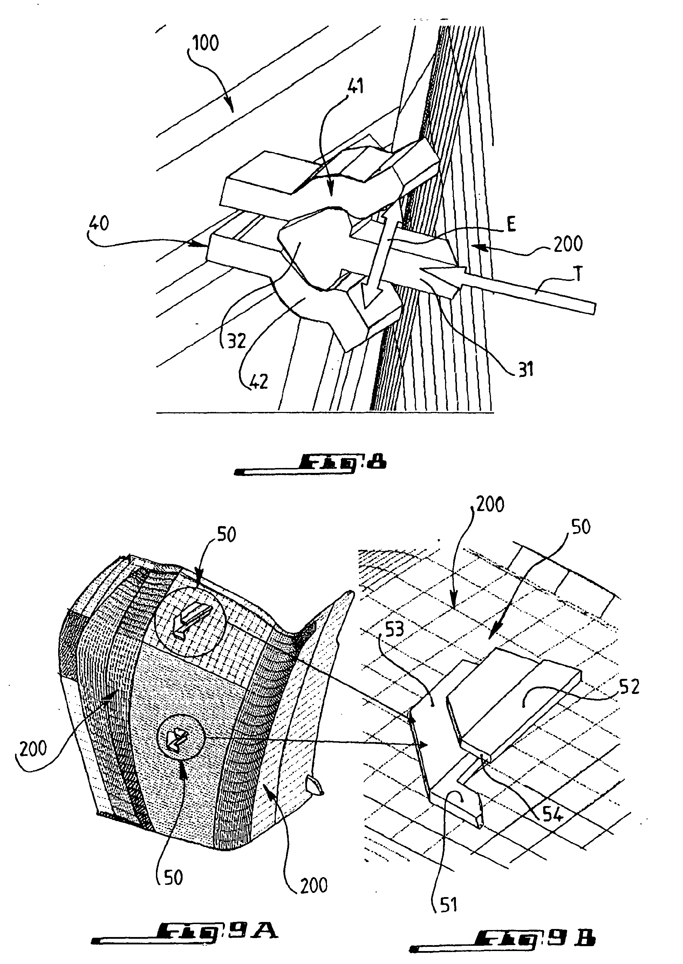

En référence également à la figure 8, la tête 32 en forme de « flèche » de chaque patte de clippage 30 est destinée à venir se bloquer par « encliquetage » dans les deux lèvres 41 et 42 d'un dispositif de clippage élastiquement déformable 40 du boîtier de feu 100, de manière à permettre la retenue de la jupe de feu 200 sur le boîtier de feu 100. La flèche T illustre la translation de la patte de clippage 30 dans le dispositif déformable 40 qui s'ouvre (flèche E) au moment de l'engagement de la tête 32 dans les deux lèvres 41 et 42. Puis l'élasticité du dispositif déformable 40 joue, et alors les lèvres 41 et 42 à élasticité radiale se resserrent une fois la tête 32 en position dans ces dernières.

Le système de fixation selon la présente invention comporte enfin des moyens de plaquage de la jupe de feu 200 sur le boîtier de feu 100, qui ont pour fonction de garantir un bon plaquage de la jupe sur le boîtier.

Ces moyens de plaquage comprennent des moyens de plaquage situés sur la jupe de feu 200 qui coopèrent par concordance des formes avec des moyens complémentaires de plaquage situés sur le boîtier de feu 100.

En référence aux figures 9A et 9B, à titre d'exemple non limitatif de l'objet de l'invention, les moyens de plaquage situés sur la jupe de feu 200 peuvent être au nombre de deux, régulièrement répartis sur la hauteur de la jupe de feu 200.

Chaque moyen de plaquage situé sur la jupe de feu 200 présente la forme d'une patte de plaquage, de référence générale 50, solidaire ou issue directement de la jupe de feu 200. Chaque patte de plaquage 50 est formée par deux plaques 52 et 53 accolées l'une à l'autre, la plaque 53 ayant une extension orthogonale en crochet 51 et la plaque 52 une butée orthogonale 54, qui viennent coopérer par concordance des formes avec des moyens complémentaires situés sur le boîtier de feu 100.

Ainsi, en vis-à-vis des pattes de plaquage 50 définies sur la jupe de feu 200 sont prévus, sur le boîtier de feu 100, des supports de patte de plaquage, de référence générale 60, solidaires du boîtier de feu 100.

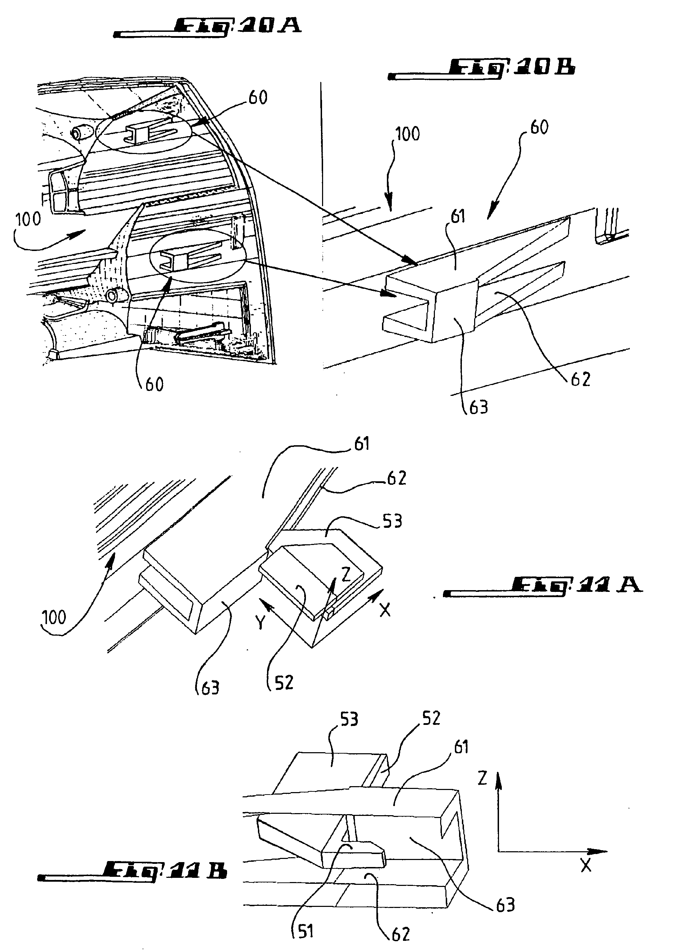

Chaque support de patte de plaquage 60 présente une forme générale en tunnel de section en « U », l'extrémité en crochet 51 de la patte de plaquage 50 venant s'insérer entre les branches 61 et 62 du tunnel en « U » du support de patte de plaquage 60, et en butée contre la face interne de la base du « U » référencée 63, comme cela est mieux représenté sur le dessin des figures 11A et 11B.

On va maintenant décrire le procédé d'assemblage d'une jupe de feu 200 sur un boîtier de feu 100 de véhicule au moyen d'un tel système de fixation, c'est-à-dire d'un système comportant des moyens de positionnement, des moyens de clippage et des moyens de plaquage de la jupe de feu sur le boîtier de feu, tels que ceux décrits ci-dessus.

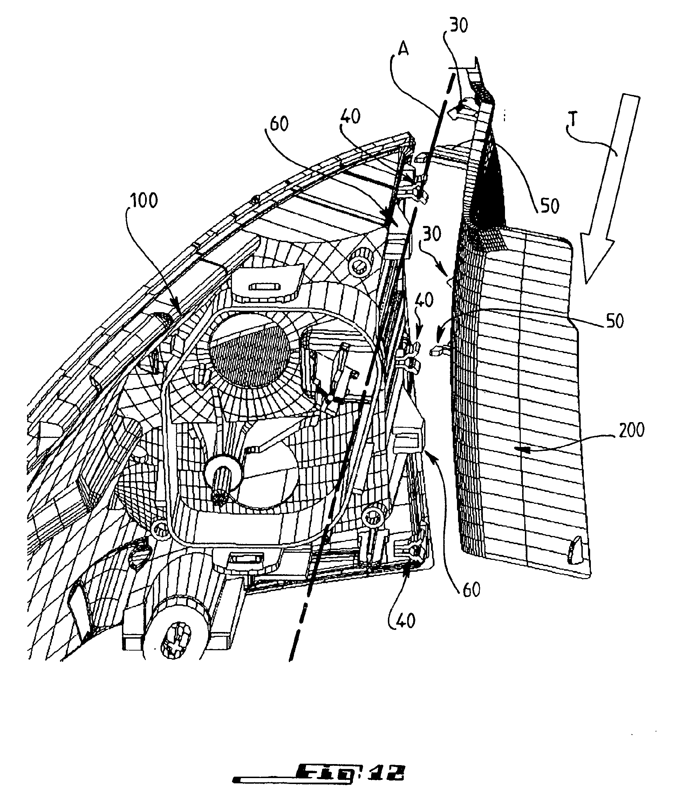

Une première étape du procédé d'assemblage consiste en une approche de la jupe de feu 200 sur le boîtier de feu 100 par translation (sens de la flèche T de la figure 12) de la jupe de feu 200 selon l'axe de translation désigné A et représenté en traits interrompus.

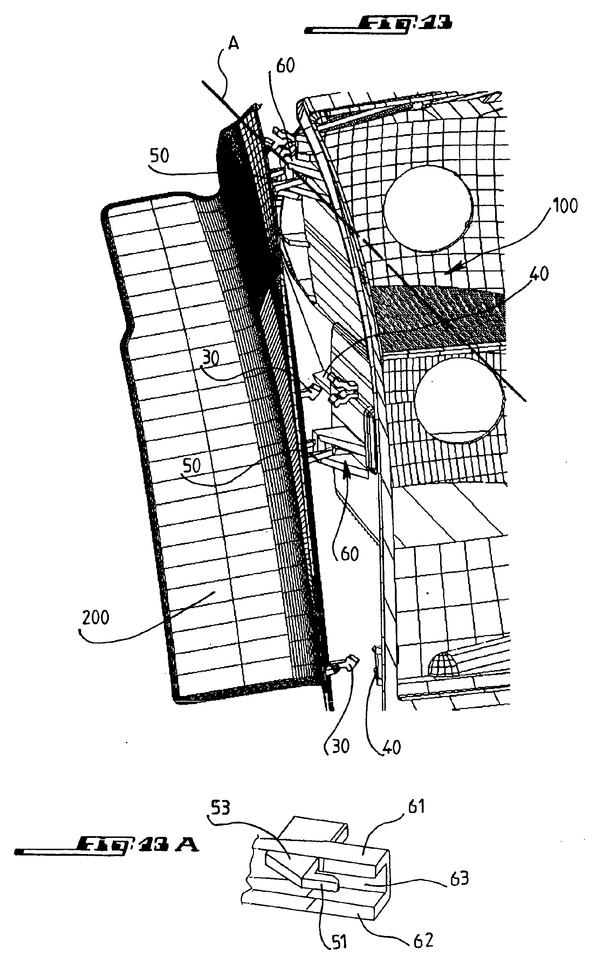

Cette translation (d'axe A) de la jupe de feu 200 s'effectue jusqu'à ce que les moyens de plaquage 50, 60 soient en position d'assemblage, comme représenté sur le dessin des figures 13 et 13A, c'est-à-dire jusqu'à ce que les extrémités en crochet 51 des pattes de plaquage 50 soient engagées entre les branches 61 et 62 des support de patte de plaquage 60 respectifs, en butée contre leur base 63, comme cela est mieux représenté en détail sur le dessin de la figure 13A.

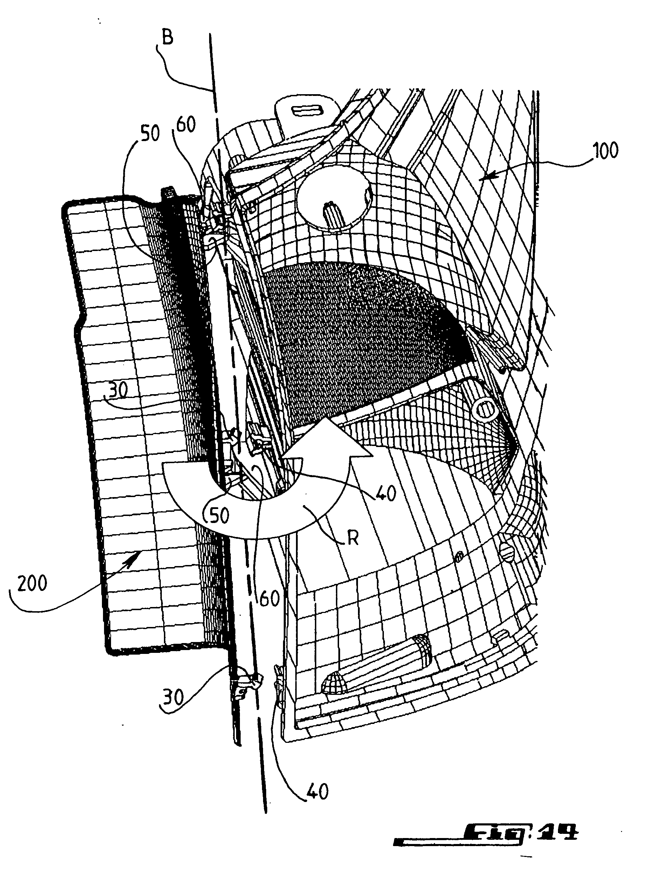

Les moyens de plaquage 50, 60 étant mis en place et assemblés, la seconde étape du procédé d'assemblage consiste en une rotation « R » de la jupe de feu 200 selon l'axe de rotation désigné B de la figure 14.

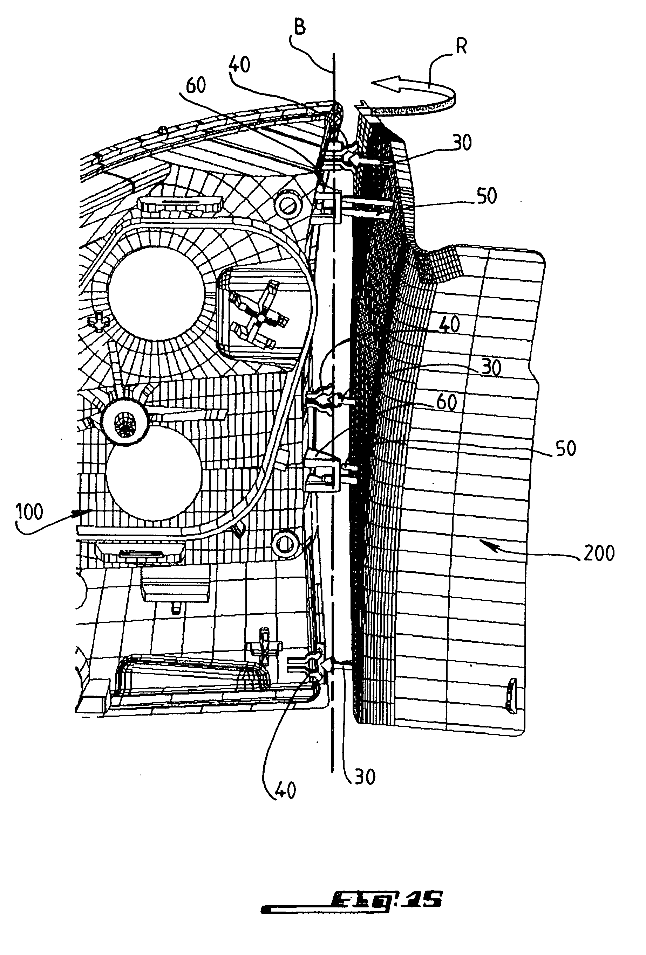

Cette rotation est également représentée sur le dessin de la figure 15 en vue arrière, sur laquelle sont représentées les deux pattes de plaquage 50 en position d'assemblage dans leur support de patte de plaquage 60 respectifs.

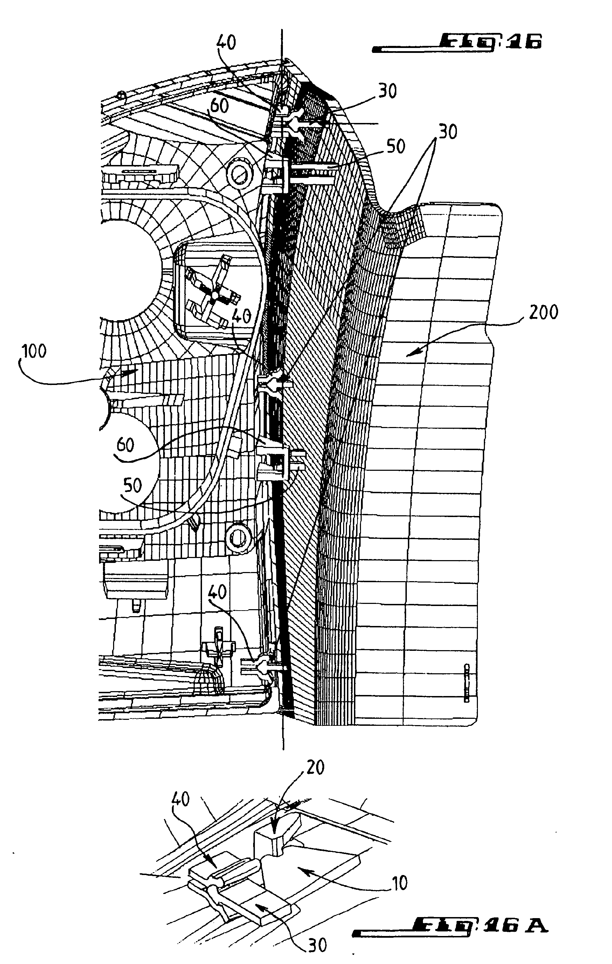

Une fois l'étape de rotation terminée, l'assemblage des moyens de clippage 30, 40 et des moyens de positionnement 10, 20 est réalisé. Ainsi, comme on peut le voir sur le dessin de la figure 16 et, de manière plus détaillée, sur le dessin de la figure 16A, les trois pattes de clippage 30, issues de la jupe 200, sont « encliquetées » dans les trois dispositifs de clippage élastiquement déformables 40 correspondants du boîtier de feu 100 et les supports de positionnement 10, issues de la jupe de feu 200, sont plaqués contre les pattes de positionnement 20 correspondantes du boîtier de feu 100.

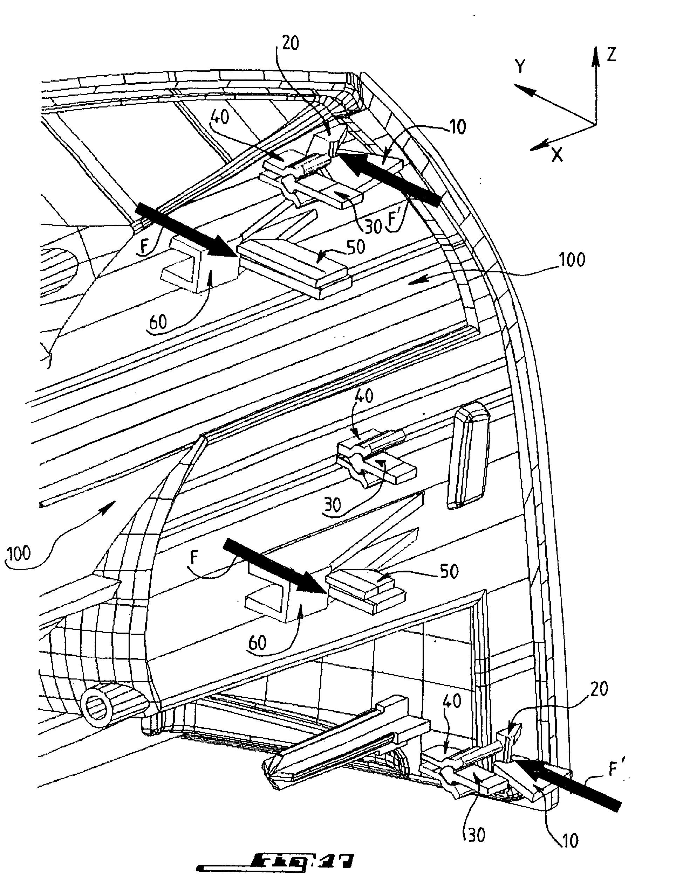

On a représenté sur le dessin de la figure 17 tous les moyens du système de fixation de l'invention mis en place. On a également illustré les efforts qui s'appliquent et garantissent une bonne mise position et un bon plaquage de la jupe de feu 200 sur le boîtier de feu 100. Ces efforts comprennent les efforts F de retenue de la jupe 200 engendrés par l'assemblage des moyens de placage 50, 60 et les efforts F', dirigés en sens inverse des efforts F, engendrés par l'assemblage des moyens de positionnement 10, 20.

Le système de fixation de la présente invention présente de nombreux avantages, parmi lesquels les avantages suivants :
- il permet de garantir une bonne tenue de la jupe de feu sur le boîtier de feu,
- il n'est pas visible,
- il ne nécessite aucune pièce ou élément de fixation rapporté (vis, colle, soudure),
- il est facile à mettre en place,
- il est issu par moulage de la jupe de feu et du boîtier de feu, d'où un gain économique,
- il apporte une bonne répartition des efforts mécaniques, ce qui garantit un bon positionnement et un bon plaquage de la jupe de feu dans la face avant du feu, c'est-à-dire dans une zone visible de l'extérieur où aucun défaut n'est acceptable.

Bien entendu, la présente invention n'est pas limitée au mode de réalisation décrit et représenté ci-dessus à titre d'exemple ; d'autres modes de réalisation peuvent être conçus par l'homme de métier sans sortir du cadre et de la portée de la présente invention.

## Revendications

1. Système de fixation d'une jupe de feu (200) sur un boîtier de feu (100) de véhicule, **caractérisé en ce qu'**il comprend :
- des moyens de positionnement (10, 20) de la jupe (200) sur le boîtier de feu (100),
- des moyens de clippage (30, 40) de la jupe (200) sur le boîtier de feu (100), et
- des moyens de plaquage (50, 60) de la jupe (200) sur le boîtier de feu (100).

2. Système selon la revendication 1, **caractérisé en ce que** lesdits moyens de positionnement (10, 20) de la jupe (200) sur le boîtier de feu (100) comprennent au moins un moyen de positionnement, chaque moyen de positionnement (10, 20) comprenant un support de positionnement (10), solidaire de la jupe (200), et destiné à recevoir et positionner, par concordance de formes, une patte de positionnement (20), solidaire du boîtier de feu (100).

3. Système selon la revendication 2, **caractérisé en ce que** chaque patte de positionnement (20) présente une forme de « U » dirigé selon l'axe longitudinal (X) du véhicule, un support de positionnement (10) de la jupe (200) venant en butée contre la base (24) de ladite forme en « U ».

4. Système selon l'une quelconque des revendication 1 à 3, **caractérisé en ce que** lesdits moyens de positionnement (10, 20) de la jupe (200) sur le boîtier de feu (100) comprennent un moyen de positionnement (10, 20) en partie supérieure et un moyen de positionnement (10, 20) en partie inférieure de la jupe de feu (200).

5. Système selon la revendication 1, **caractérisé en ce que** lesdits moyens de clippage (30, 40) de la jupe (200) sur le boîtier de feu (100) comprennent une pluralité de moyens de clippage, chaque moyen de clippage (30, 40) comprenant une patte de clippage (30), solidaire de la jupe (200), et un dispositif de clippage élastiquement déformable (40), solidaire du boîtier (100), destiné à retenir et bloquer la patte de clippage (30).

6. Système selon la revendication 5, **caractérisé en ce que** chaque patte de clippage (30) de la jupe de feu présente une extrémité en forme de flèche (32) qui vient s'encliqueter dans ledit dispositif de clippage élastiquement déformable (40) du boîtier.

7. Système selon l'une quelconque des revendications 5 et 6, **caractérisé en ce que** les moyens de clippage (30, 40) de la jupe de feu (200) sur le boîtier de feu (100) sont au nombre de trois, régulièrement répartis sur la hauteur de la jupe (200).

8. Système selon la revendication 1, **caractérisé en ce que** lesdits moyens de plaquage (50, 60) de la jupe de feu (200) sur le boîtier de feu (100) de véhicule comprennent au moins un moyen de plaquage, chaque moyen de plaquage (50, 60) comportant une patte de plaquage (50), solidaire de la jupe (200), destinée à venir s'insérer dans un support de patte de plaquage (60), solidaire du boîtier de feu (100).

9. Système selon la revendication 8, **caractérisé en ce que** chaque patte de plaquage (50) présente une partie en forme de crochet (51), et chaque support de patte de plaquage (60) une forme générale en « U », l'extrémité en crochet (51) de la patte de plaquage (50) venant s'insérer entre les branches (61, 62) du « U » du support de patte de plaquage (60).

10. Système selon l'une quelconque des revendications 8 et 9, **caractérisé en ce que** lesdits moyens de plaquage (50, 60) de la jupe (200) sur le boîtier (100) sont au nombre de deux répartis sur la hauteur de la jupe (200).

11. Procédé d'assemblage d'une jupe de feu sur un boîtier de feu de véhicule au moyen d'un système de fixation conforme à l'une quelconque des revendications 1 à 10, **caractérisé par** les étapes suivantes, prises en combinaison :
- translation (T) de la jupe de feu (200) sur la partie latérale du boîtier de feu (100) jusqu'à ce que ce que les moyens de plaquage (50, 60) soient assemblés,
- rotation (R) de la jupe de feu (200) autour d'un axe (B) de rotation, sensiblement compris dans le plan de plaquage de la jupe (200) sur le boîtier (100), jusqu'à ce que les moyens de positionnement (10, 20) et les moyens de clippage (30, 40) soient assemblés.

## Claims

1. System for attaching a light skirt (200) to a vehicle light housing (100), **characterised in that** it comprises:
- means (10, 20) for positioning the skirt (200) on the light housing (100),
- means (30, 40) for clipping the skirt (200) onto the light housing (100), and
- means (50, 60) for pressing the skirt (200) onto the light housing (100).

2. System according to claim 1, **characterised in that** said means (10, 20) for positioning the skirt (200) on the light housing (100) comprise at least one positioning means, each positioning means (10, 20) comprising a positioning support (10) attached to the skirt (200) and intended to receive and position, by shape matching, a positioning lug (20) attached to the light housing (100).

3. System according to claim 2, **characterised in that** each positioning lug (20) has a U-shape directed along the longitudinal axis (X) of the vehicle, a positioning support (10) of the skirt (200) coming into abutment against the base (24) of said U-shape.

4. System according to any one of claims 1 to 3, **characterised in that** said means (10, 20) for positioning the skirt (200) on the light housing (100) comprise one positioning means (10, 20) in the upper part and one positioning means (10, 20) in the lower part of the light skirt (200).

5. System according to claim 1, **characterised in that** said means (30, 40) for clipping the skirt (200) onto the light housing (100) comprise a plurality of clipping means, each clipping means (30, 40) comprising a clipping lug (30) attached to the skirt (200) and an elastically deformable clipping device (40) attached to the housing (100) and intended to retain and lock the clipping lug (30).

6. System according to claim 5, **characterised in that** each clipping lug (30) of the light skirt has one end in the shape of an arrow (32) which snaps into said elastically deformable clipping device (40) of the housing.

7. System according to any one of claims 5 and 6, **characterised in that** the means (30, 40) for clipping the light skirt (200) onto the light housing (100) are three in number, regularly distributed over the height of the skirt (200).

8. System according to claim 1, **characterised in that** said means (50, 60) for pressing the light skirt (200) onto the vehicle light housing (100) comprise at least one pressing means, each pressing means (50, 60) comprising a pressing lug (50) attached to the skirt (200) and intended to be inserted into a pressing lug support (60) attached to the light housing (100).

9. System according to claim 8, **characterised in that** each pressing lug (50) has a hook-shaped part (51), and each pressing lug support (60) has the overall shape of a "U", the hook-shaped end (51) of the pressing lug (50) being inserted between the branches (61, 62) of the "U" of the pressing lug support (60).

10. System according to any one of claims 8 and 9, **characterised in that** said means (50, 60) for pressing the skirt (200) onto the housing (100) are two in number, distributed over the height of the skirt (200).

11. Method for assembling a light skirt on a vehicle light housing by means of an attachment system according to any one of claims 1 to 10, **characterised by** the following steps, taken in combination:
- moving the light skirt (200) in translation (T) on the lateral part of the light housing (100) until the pressing means (50, 60) are assembled,
- rotating (R) the light skirt (200) about a rotation axis (B), substantially in the plane in which the skirt (200) is pressed onto the housing (100), until the positioning means (10, 20) and the clipping means (30, 40) are assembled.

## Patentansprüche

1. System zur Befestigung einer Lichtschürze (200) an einem Lichtgehäuse (100) eines Fahrzeugs, **dadurch gekennzeichnet, dass** es folgende Teile umfasst:
- Mittel zur Positionierung (10, 20) der Schürze (200) am Lichtgehäuse (100),
- Mittel zum Anclipsen (30, 40) der Schürze (200) am Lichtgehäuse (100), und
- Mittel zum Andrücken (50, 60) der Schürze (200) an das Lichtgehäuse (100).

2. System nach Anspruch 1, **dadurch gekennzeichnet, dass** die Mittel zur Positionierung (10, 20) der Schürze (200) am Lichtgehäuse (100) zumindest ein Positionierungsmittel umfassen, wobei jedes Positionierungsmittel (10, 20) einen Positionierungsträger (10) umfasst, der fest mit der Schürze (200) verbunden und dazu bestimmt ist, durch Formschluss eine Positionierungslasche (20) aufzunehmen und zu positionieren, die fest mit dem Lichtgehäuse (100) verbunden ist.

3. System nach Anspruch 2, **dadurch gekennzeichnet, dass** jede Positionierungslasche (20) die Form eines "U" aufweist, das nach der Längsachse (X) des Fahrzeugs gerichtet ist, wobei ein Positionierungsträger (10) der Schürze (200) an der Basis (24) der U-Form zum Anschlag kommt.

4. System nach einem der Ansprüche 1 bis 3, **dadurch gekennzeichnet, dass** die Positionierungsmittel (10, 20) der Schürze (200) am Lichtgehäuse (100) ein Positionierungsmittel (10, 20) am oberen Teil und ein Positionierungsmittel (10, 20) am unteren Teil der Lichtschürze (200) umfassen.

5. System nach Anspruch 1, **dadurch gekennzeichnet, dass** die Mittel zum Anclipsen (30, 40) der Schürze (200) am Lichtgehäuse (100) eine Mehrzahl von Mitteln zum Anclipsen umfassen, wobei jedes Mittel zum Anclipsen (30, 40) eine Clipslasche (30), die fest mit der Schürze (200) verbunden ist, und eine elastisch verformbare Clipsvorrichtung (40), die fest mit dem Gehäuse (100) verbunden und dazu bestimmt ist, die Clipslasche (30) festzuhalten und zu blockieren, umfasst.

6. System nach Anspruch 5, **dadurch gekennzeichnet, dass** jede Clipslasche (30) der Lichtschürze ein Ende in Form eines Pfeils (32) aufweist, das in die elastisch verformbare Clipsvorrichtung (40) des Gehäuses einrastet.

7. System nach einem der Ansprüche 5 und 6, **dadurch gekennzeichnet, dass** von den Mitteln zum Anclipsen (30, 40) der Lichtschürze (200) am Lichtgehäuse (100) drei Stück vorhanden sind, die gleichmäßig über die Höhe der Schürze (200) verteilt sind.

8. System nach Anspruch 1, **dadurch gekennzeichnet, dass** die Mittel zum Andrücken (50, 60) der Lichtschürze (200) an das Lichtgehäuse (100) eines Fahrzeugs zumindest ein Andrückmittel umfassen, wobei jedes Andrückmittel (50, 60) eine Andrücklasche (50) umfasst, die fest mit der Schürze (200) verbunden und dazu bestimmt ist, sich in einen Andrücklaschenträger (60) einzufügen, der fest mit dem Lichtgehäuse (100) verbunden ist.

9. System nach Anspruch 8, **dadurch gekennzeichnet, dass** jede Andrücklasche (50) einen hakenförmigen Teil (51) und jeder Andrücklaschenträger (60) eine allgemeine "U"-Form aufweist, wobei das hakenförmige Ende (51) der Andrücklasche (50) zwischen den Schenkeln (61, 62) des "U" des Andrücklaschenträgers (60) eingefügt wird.

10. System nach einem der Ansprüche 8 und 9, **dadurch gekennzeichnet, dass** die Mittel zum Andrücken (50, 60) der Schürze (200) am Gehäuse (100) zu zweit vorliegen, die über die Höhe der Schürze (200) verteilt sind.

11. Verfahren zum Montieren einer Lichtschürze an einem Lichtgehäuse eines Fahrzeugs anhand eines Befestigungssystems nach einem der Ansprüche 1 bis 10, **gekennzeichnet durch** die nachstehenden Schritte in Kombination:
- Verschieben (T) der Lichtschürze (200) auf den Seitenteil des Lichtgehäuses (100), bis die Andrückmittel (50, 60) montiert sind,
- Drehen (R) der Lichtschürze (200) um eine Rotationsachse (B), die im Wesentlichen in der Andrückebene der Schürze (200) am Gehäuse (100) liegt, bis die Positionierungsmittel (10, 20) und die Mittel zum Anclipsen (30, 40) montiert sind.
